# EUROPÄISCHE PATENTSCHRIFT

(11) **EP 3 727 905 B1**
(45) Veröffentlichungstag und Bekanntmachung des Hinweises auf die Patenterteilung: **26.06.2024**
(21) Anmeldenummer: 18779581.0
(22) Anmeldetag: 19.09.2018
(51) Int. Cl.: B60G 11/14, B60G 11/27, B60G 11/56, B60G 17/052, B60G 17/015, G01G 19/10

(54) **VERFAHREN ZUR ERMITTLUNG EINER ACHSLAST AN EINEM MECHANISCH UND/ODER PNEUMATISCH ODER HYDRAULISCH GEFEDERTEN FAHRZEUG SOWIE FAHRZEUG**
METHOD FOR DETERMINING AN AXLE LOAD ON A MECHANICALLY AND/OR PNEUMATICALLY OR HYDRAULICALLY SUSPENDED VEHICLE AND VEHICLE
PROCÉDÉ POUR DÉTERMINER UNE CHARGE DE L'ESSIEU SUR UN VÉHICULE AMORTI DE MANIÈRE MÉCANIQUE ET/OU PNEUMATIQUE OU HYDRAULIQUE AINSI QUE VÉHICULE

(30) Priorität: 19.12.2017 DE 102017011753
(43) Veröffentlichungstag der Anmeldung: 28.10.2020
(73) Patentinhaber: ZF CV Systems Europe BV, 1170 Brussels (BE)
(72) Erfinder: JOVERS, Ingo, 30989 Gehrden (DE); LUCAS, Johann, 31319 Sehnde (DE)
(74) Vertreter: Ohlendorf, Henrike
(86) Internationale Anmeldenummer: PCT/EP2018/075344
(87) Internationale Veröffentlichungsnummer: WO 2019/120652

(56) Entgegenhaltungen:
- EP-A1- 1 167 094
- DE-A1- 19 546 728
- DE-A1-102012 108 684
- DE-A1-102016 004 721
- US-A1- 2008 269 986

## Beschreibung

Die Erfindung betrifft ein Verfahren zur Ermittlung einer Achslast an einem mechanisch und/oder pneumatisch oder hydraulisch gefederten Fahrzeug. Außerdem betrifft die Erfindung ein Fahrzeug mit einer Vorrichtung zur Durchführung eines solchen Verfahrens und einem entsprechend ausgebildeten Niveauregelsystem.

Die Ermittlung der Achslast an Fahrzeugen dient der Anzeige und Überwachung von dessen Beladungszustand. Dadurch sollen sicherheitsgefährdende Überladungen sowie ungünstige Gewichtsverteilungen am Fahrzeug vermieden werden. Insbesondere in Nutzfahrzeugen ist der Einbau von Überlastanzeigen, welche Überladungen anzeigen, bereits obligatorisch oder wird dies zukünftig sein.

Bereits bekannt sind elektronisch geregelte Luftfederungen zur Niveauregulierung in Fahrzeugen, die erweiterte Funktionen aufweisen, bei denen auch die Achslast an luftgefederten Achsen ermittelt werden kann. Ein solches System ist beispielsweise das in der Firmenschrift der WABCO GmbH "ECAS im Motorwagen", 2. Ausgabe, 2007, beschriebene, modular aufgebaute ECAS-System (Electronically Controlled Air Suspension), das seit langem in Nutzfahrzeugen wie Lastkraftwagen, Bussen und Anhängefahrzeugen oder auch in Personenkraftwagen eingesetzt wird.

Eine derartige elektronische Luftfederungsanlage besteht im Wesentlichen aus mehreren verstellbaren, als Tragbälge ausgebildeten Luftfederelementen, einer elektronischen Steuereinheit, die in ein Datenbussystem (CAN) eingebunden sein kann, einer Wegmesseinrichtung zur Erfassung von Weggrößen für eine Niveaubestimmung, einer Steuerventileinrichtung zur Betätigung der Luftfederelemente sowie einer Bedieneinheit für den Benutzer. Bei Nutzfahrzeugen wie Lastkraftwagen und Bussen ermöglicht diese Luftfederungsanlage eine Niveauregelung zum erleichterten Beladen beziehungsweise Entladen eines Fahrzeugs. Insbesondere bei Anhängefahrzeugen kann eine gleichbleibende Aufbauhöhe und ein verbesserter Reifenfreilauf bei jeder Beladung erreicht werden.

Ein solches System erlaubt meistens die Auswahl mehrerer schaltbarer Fahrniveaus, also eines bestimmten Abstandswerts von einem Fahrzeugaufbau zu einer oder mehreren Fahrzeugachsen. Neben einem durch den Fahrzeughersteller festlegbaren Normalniveau für den Fahrbetrieb können weitere Niveaus, beispielsweise zur Höhenanpassung eines Lastzugs, zur Stabilitätsverbesserung bei hohen Geschwindigkeiten oder zur Kraftstoffersparnis wählbar sein. Durch die Steuerung der Luftfederung erfolgt eine automatische Nachregelung des jeweils voreingestellten Fahrniveaus im Fahrbetrieb. Dazu wird während der Fahrt ein permanenter Vergleich eines Istniveaus mit einem Sollniveau durchgeführt. Überschreitet das Istniveau bei der Fahrt eine vorgegebene Toleranzschwelle vom Sollniveau in positiver oder negativer Richtung und befindet sich somit aktuell außerhalb einer Toleranzbreite der Niveaueinstellung, so gleicht die Steuereinheit das Istniveau dem Sollniveau durch Ansteuern des Ventilkreises und entsprechendes Belüften/Entlüften eines oder mehrerer Tragbälge wieder an. Bei einer Änderung des Vorgabewerts für das Sollniveau erfolgt ebenfalls eine entsprechende Ansteuerung des Ventilkreises, wobei eine Einschwingzeit des Systems zu berücksichtigen ist.

Systeme wie das erwähnte ECAS können darüber hinaus einen oder mehrere Drucksensoren aufweisen, aufgrund deren Messwerte beispielsweise eine Liftachse betätigt, eine Anfahrhilfe geregelt, die Traktion des Fahrzeugs gesteuert oder eine Reifeneindrückung kompensiert werden kann. Der Steuereinheit wird dabei ein Signal bei Überschreitung beziehungsweise Unterschreitung der zulässigen Achslast übermittelt. Diese Systeme sind allerdings nur für die Ermittlung der Achslast an luftgefederten, also an pneumatisch oder gegebenenfalls an hydraulisch gefederten Achsen, nicht jedoch an stahlgefederten, also an mechanisch gefederten Achsen konzipiert.

Die EP 2 097 278 B1 beschreibt ein Verfahren, mit dem eine Achslastanzeige eines ECAS-Niveauregelsystems über eine Bedieneinheit kalibriert werden kann. Das Verfahren ist für ein Nutzfahrzeug mit Balgfedern zur pneumatischen Niveauregulierung vorgesehen.

Die DE 10 2013 000 874 A1 beschreibt ein Verfahren zur Anzeige der Achslast eines Fahrzeugs, bei dem Achslasten unterhalb eines zulässigen Maximums, bei Erreichen des Maximums und bei Überschreiten dieses Maximums jeweils mit unterschiedlichen Signalen angezeigt werden. Das Verfahren ist zur Durchführung an einem luftgefederten Fahrzeug konzipiert.

Die DE 195 46 728 A1 offenbart ein Fahrzeug mit einer Niveauregeleinrichtung, wobei eine durch Beladung des Fahrzeugs und eine daraus folgende Reifeneindrückung veränderliche Höhe eines Fahrzeugaufbaus gegenüber einer Fahrzeugachse bestimmt wird.

An mechanisch gefederten Fahrzeugachsen werden hingegen zur Achslastermittlung anstelle von Drucksensoren Wegsensoren genutzt. Die Achslastermittlung beruht dabei auf der Messung eines Federwegs eines Federelements, durch das eine Fahrzeugachse oder einzelne Fahrzeugräder mit einem Fahrzeugaufbau federnd gekoppelt sind. Der Wegsensor befindet sich dabei in der Regel am Fahrzeugaufbau in der Nähe der Fahrzeugachse, deren Achslast gemessen werden soll. Der Wegsensor ist über einen Hebel mit der betreffenden Achse verbunden, wobei mittels des als Drehwinkelsensor ausgebildeten Wegsensors eine Drehbewegung des Hebels erfasst und daraus auf eine Achslast geschlossen werden kann.

Die DE 10 2016 004 721 A1 beschreibt eine Messeinrichtung zur Messung einer Achslast an einem Fahrzeug, mit mindestens einem mechanischen Federelement, über welches eine Achse mit einem Fahrzeugaufbau federnd gekoppelt ist. Die Messeinrichtung weist einen Drehwinkelsensor und ein mehrarmiges Übertragungsgetriebe auf, welches eine Relativbewegung des Federelements in eine Drehbewegung umsetzt, die mithilfe des Drehwinkelsensors gemessen wird. Aus der Federkonstante des Federelements und der gemessenen Einfederung kann die Kraft ermittelt werden, welche auf den Fahrzeugachsen liegt, wodurch die Achslast des Fahrzeugs bestimmt werden kann.

Außerdem sind bereits On-Board-Wiegesysteme wie Air-Weigh^{™} bekannt, die in Fahrzeuge mit unterschiedlichen Federungssystemen oder mit gemischter Federung eingebaut werden können. Dies sind jedoch separate Vorrichtungen, die nur die Achslast ermitteln. Für eine Niveauregulierung ist dann ein zusätzliches System wie das ECAS erforderlich.

Die bekannten Systeme zur Achslastermittlung sind entweder nur für pneumatisch oder hydraulisch gefederte Fahrzeuge oder nur für mechanisch gefederte Fahrzeuge vorgesehen oder sie sind separate Einrichtungen speziell zur Fahrzeuggewichtsermittlung ohne Niveauregelung. Es muss somit für verschieden gefederte Fahrzeuge sowie für Fahrzeuge mit oder ohne Niveauregelung jeweils das passende System von Sensoren, Messeinrichtungen und Steuerungen oder sogar zwei unabhängige Systeme verbaut werden. Dies erhöht angesichts der für beide Federungsarten zukünftig ohnehin obligatorischen Überlastanzeigen die Kosten der Hersteller, da für beide Typen die entsprechenden Systeme weiterentwickelt und vorgehalten werden müssen. Für gemischt gefederte Fahrzeuge, welche beispielsweise an sich stahlgefedert sind und eine oder mehrere luftgefederte Zusatzachsen aufweisen, die zusätzlich eine Niveauregulierung ermöglichen sollen, entstehen besonders hohe Kosten, um die Achslast an allen Achsen messen und anzeigen zu können sowie gegebenenfalls das Fahrzeugniveau zu regeln.

Vor diesem Hintergrund lag der Erfindung die Aufgabe zugrunde, ein Verfahren der eingangs genannten Art vorzuschlagen, mit dem zum einen an mechanisch gefederten Fahrzeugen zumindest eine Achslastermittlung und zum anderen an pneumatisch oder hydraulisch gefederten oder an gemischt gefederten Fahrzeugen eine Achslastermittlung mit der Möglichkeit einer Niveauregelung durchgeführt werden kann. Eine weitere Aufgabe bestand darin, eine Vorrichtung zur Verfügung zur stellen, die eine Durchführung dieses Verfahrens mit weitgehend einheitlichen Komponenten ermöglicht und die zudem kostengünstig in der Herstellung ist. Insbesondere sollen dieses Verfahren und diese Vorrichtung für den Einsatz in einem Nutzfahrzeug geeignet sein.

Die Lösung dieser Aufgabe ergibt sich aus den Merkmalen der unabhängigen Ansprüche, während vorteilhafte Ausgestaltungen und Weiterbildungen der Erfindung den jeweils zugeordneten abhängigen Ansprüchen entnehmbar sind.

Der Erfindung lag die Erkenntnis zugrunde, dass ein an sich bereits verfügbares Luftfeder-Niveauregelsystem für Fahrzeuge grundsätzlich alle Komponenten aufweist, welche für ein Achslastmesssystem erforderlich sind, und zwar unabhängig von der Art der Federung des Fahrzeugs. Ein solches System kann mit vergleichsweise geringem Aufwand angepasst beziehungsweise erweitert werden. Dadurch ergibt sich ein Kosteneinsparpotenzial für Überlastanzeigen in pneumatisch oder hydraulisch, mechanisch oder gemischt gefederten Fahrzeugen.

Die Erfindung geht daher zunächst aus von einem Verfahren zur Ermittlung einer Achslast an einem mechanisch und/oder pneumatisch oder hydraulisch gefederten Fahrzeug. Zur Lösung der verfahrensbezogenen Aufgabe sieht die Erfindung vor, dass die Achslast mithilfe von für ein elektronisch geregeltes pneumatisches oder hydraulisches Niveauregelsystem vorgesehenen Steuermittel und Sensormitteln ermittelt wird, wobei diese Steuer- und Sensormittel in dem Fahrzeug derart installiert und/oder funktional erweitert sind, dass zusätzlich zu einer Niveauregelung oder anstelle einer Niveauregelung Funktionen zur Achslastermittlung an mechanisch gefederten Fahrzeugachsen sowie zur Achslastermittlung an pneumatisch oder hydraulisch gefederten Fahrzeugachsen verfügbar sind, wobei die Achslastermittlung an einer mechanisch gefederten Fahrzeugachse mittels einer Wegmesseinrichtung erfolgt, wobei die Achslastermittlung an einer pneumatisch oder hydraulisch gefederten Fahrzeugachse mittels einer Druckmesseinrichtung erfolgt, und wobei zunächst eine in einer elektronischen Steuereinheit des Niveauregelsystems implementierte Plausibilitätsprüfung durchgeführt wird, anhand der das Niveauregelsystem die jeweilige Federungsart mechanisch oder pneumatisch oder hydraulisch einer Fahrzeugachse erkennt sowie anschließend die entsprechende Funktion zur Achslastermittlung aktiviert wird.

Unter dem verwendeten Begriff einer mechanischen Federung wird üblicherweise eine Stahlfederung verstanden. Grundsätzlich kann eine mechanische Federung anstelle von Stahlfedern Federn aus anderen Materialen, wie anderen Legierungen oder Verbundwerkstoffen aufweisen. Wenn hier von stahlgefederten Achsen die Rede ist, soll dies keine Einschränkung der Erfindung auf mechanische Federn aus diesem Material beinhalten. Wenn von luftgefederten Fahrzeugachsen die Rede ist, kann entsprechendes auf hydraulisch gefederte Achsen übertragen werden. Unter einer pneumatischen oder hydraulischen Federung wird eine Federung verstanden, die entweder auf Luftfedern (pneumatisch) oder auf Flüssigkeitsfedern (hydraulisch) beruhen kann.

Die Bezeichnung "ECAS" steht wie eingangs bereits erwähnt als Abkürzung für eine elektronisch geregelte Luftfederungseinrichtung (Electronically Controlled Air Suspension).

Durch die Erfindung ist ein integriertes Achslastmesssystem zur Verfügung gestellt, das unabhängig von pneumatisch oder hydraulisch oder mechanisch ausgebildeter Federung die Achslast an den Achsen eines Fahrzeugs bestimmen kann. Das erfindungsgemäß Verfahren ermöglicht demnach die Achslastermittlung an mechanisch gefederten, luftgefederten oder gemischtgefederten Fahrzeugen mit einheitlichen Komponenten, welche auf einem bekannten Luftfeder-Niveauregelsystem basieren. Demnach wird eine Steuereinheit eines Luftfeder-Niveauregelsystems dahingehend softwaretechnisch erweitert, dass außer den bereits vorhandenen Funktionen der Niveauregulierung an der Luftfederung und der Achslastermittlung an luftgefederten Achsen nun auch die Achslastermittlung an mechanisch gefederten Achsen mit dieser Steuereinheit durchgeführt werden kann. Dieselbe Steuereinheit ist also in der Lage, die Achslast beispielsweise an stahl- oder luftgefederten Achsen zu messen. Dazu werden an den mechanisch gefederten Achsen solche Wegsensoren verwendet, die an den luftgefederten Achsen üblicherweise für die Niveauregulierung genutzt werden, während die Achslastermittlung an den luftgefederten Achsen wie üblich mittels Drucksensoren durchgeführt wird. Es sind somit für die Achslastermittlung an den Fahrzeugachsen nur Wegsensoren beziehungsweise Drucksensoren erforderlich, wie sie für ein Luftfeder-Niveauregelsystem vorgesehen sind. Mit anderen Worten: Die Achslastermittlung an den mechanisch gefederten Achsen erfordert keine neuen Komponenten, es können die gleichen Wegsensoren, welche zur Niveauregulierung für das Luftfeder-Niveauregelsystem vorgesehen sind, auch zur Achslastermittlung an den mechanisch gefederten Achsen verbaut werden. Lediglich die Software der Steuereinheit muss angepasst werden.

Demnach wird zur Achslastermittlung bei einem ausschließlich mit mechanisch gefederten Achsen bestückten Fahrzeug lediglich eine gemäß der Erfindung modifizierte Steuereinheit eines Luftfeder-Niveauregelsystems sowie mindestens ein Wegsensor eines solchen Systems je Achse benötigt. Bei einem gemischt gefederten Fahrzeug wird zur Achslastermittlung wiederum eine gemäß der Erfindung modifizierte Steuereinheit sowie je mechanisch gefederte Achse mindestens ein Wegsensor und wie bisher mindestens ein Drucksensor je luftgefederter Achse benötigt. Bei einem ausschließlich luftgefederten Fahrzeug kann zur Achslastermittlung wahlweise die bisherige Steuereinheit des Luftfeder-Niveauregelsystems unverändert oder eine gemäß der Erfindung modifizierte Steuereinheit eingesetzt werden sowie wie bisher mindestens ein Drucksensor je Achse. Unabhängig davon kann das Luftfeder-Niveauregelsystem an den luftgefederten Achsen selbstverständlich seine Hauptfunktion der Niveauregelung erfüllen.

Der besondere Vorteil der Erfindung besteht also darin, dass für alle Fahrzeuge, unabhängig davon wie sie gefedert sind und ob eine Niveauregelung vorgesehen ist, ein einheitliches System Verwendung findet. Dies birgt ein erhebliches Kosteneinsparpotenzial in sich. Insbesondere wird der Aufwand zur Implementierung eines Achslastmesssystems und für eine Überlastanzeige für Nutzfahrzeuge beider Federungsarten vereinheitlicht, wodurch eine Kosteneinsparung beim Nutzer derart ausgestatteter Fahrzeuge sowie beim Hersteller der Fahrzeuge erreicht werden kann.

Damit Fehlfunktionen vermieden werden und für jede Fahrzeugachse die jeweils zur Achslastermittlung an dieser Achse richtige Funktion in der Steuereinheit aufgerufen wird, ist eine Plausibilitätsprüfung vorgesehen. Diese kann gemäß einer Ausführungsform der Erfindung durch eine einfache Komponentenüberprüfung erfolgen, nämlich dadurch, dass die Plausibilitätsprüfung eine Feststellung auf das Vorhandensein einer Steuerventileinrichtung, einer Wegmesseinrichtung und einer Druckmesseinrichtung an der jeweiligen Fahrzeugachse umfasst, wobei auf eine mechanisch gefederte Fahrzeugachse geschlossen wird, wenn an zugeordneten Eingängen oder Ausgängen der Steuereinheit des Niveauregelsystems kein Steuerventilsignal und kein Drucksensorsignal anliegen oder über einen vorbestimmten Zeitraum des Fahrzeugbetriebs den Wert Null aufweisen, sowie ein Wegsensorsignal anliegt oder ein solches Wegsensorsignal einen von Null verschiedenen Wert aufweist, und auf eine pneumatisch oder hydraulisch gefederte Fahrzeugachse geschlossen wird, wenn an zugeordneten Eingängen oder Ausgängen der Steuereinheit des Niveauregelsystems ein Steuerventilsignal und ein Drucksensorsignal stringent sowie ein Wegsensorsignal optional anliegen oder über einen vorbestimmten Zeitraum des Fahrzeugbetriebs einen von Null verschiedenen Wert aufweisen.

In einem Luftfeder-Niveauregelsystem sind bekanntermaßen meistens als Magnetventile ausgebildete Steuerventile zur Niveauregelung an luftgefederten Achsen über eine Druckregulierung der Tragbälge verbaut, und außerdem Drucksensoren, welche zur Ermittlung der Achslast an diesen Achsen eingesetzt werden. Fehlen diese Komponenten beziehungsweise deren Ausgangssignale und wird zusätzlich ein Wegsensorsignal detektiert, kann auf das Vorhandensein einer mechanisch gefederten Achse geschlossen werden. Werden hingegen sowohl Steuerventilsignale als auch Drucksignale sowie gegebenenfalls Wegsensorsignale empfangen, kann auf eine luftgefederte Achse geschlossen werden. In der Praxis wird in der Regel an einer luftgefederten Achse auch ein Wegsensor vorhanden sein, da dieser für eine Niveauregelung erforderlich ist. Für die Achslastermittlung an sich wäre hingegen der Wegsensor an der luftgefederten Achse nicht zwingend notwendig.

Die Funktion zur Achslastermittlung an einer mechanisch gefederten Fahrzeugachse kann gemäß einer Ausführungsform der Erfindung mit mindestens folgenden Schritten durchgeführt werden:
- Auswahl und Aktivierung der Funktion Achslastermittlung an einer mechanisch gefederter Fahrzeugachse anhand der Plausibilitätsprüfung,
- Erfassung eines achslastabhängigen Abstands zwischen der betreffenden Fahrzeugachse und einem Fahrzeugaufbau mittels mindestens eines an der betreffenden mechanisch gefederten Fahrzeugachse installierten Wegsensors sowie Bestimmen eines Istniveaus aus dem erfassten Messsignal,
- Berechnung der Achslast an der mechanisch gefederten Fahrzeugachse aus diesem Istniveau mittels eines Rechenalgorithmus, welcher zumindest eine Niveau-Achslast-Kennlinie oder daraus abgeleitete Größen auswertet, wobei der Rechenalgorithmus in der elektronischen Steuereinheit implementiert ist und die Kennlinie in einem Speicher dieser Steuereinheit hinterlegt ist, und
- Ausgabe der ermittelten Achslast an der mechanisch gefederten Fahrzeugachse auf einem Datenbus und/oder Weiterleitung an eine Achslastanzeigeeinrichtung sowie optionale Ausgabe des ermittelten Istniveaus an der mechanisch gefederten Fahrzeugachse auf dem Datenbus.

Bei einem herkömmlichen Niveauregelsystem wird eine Wegmessung an einer Fahrzeugachse bisher immer nur dann durchgeführt, wenn auch eine Luftfederung an dieser vorhanden ist. Diese Kopplung ist nun aufgehoben. Mit der Erfindung ist es demnach möglich, den gemessenen Weg eines Wegsensors bei Vorhandensein eines Tragbalges an einer luftgefederten Achse zur Höhenregulierung zu nutzen und beim Fehlen eines Tragbalges und eines diesen belüftenden oder entlüftenden Steuerventils, also bei einer mechanisch gefederten Achse, den gemessenen Weg mit Hilfe einer Niveau-Achslast-Kennlinie zu einer Achslast umzurechnen. Durch die Wegmessung an der mechanisch gefederten Achse steht zudem das Fahrzeugniveau an dieser Achse auf dem Datenbus zur Verfügung und kann beispielsweise in eine Niveauregelungsfunktion an den luftgefederten Achsen als zusätzliche Information eingehen.

Alternativ dazu kann die Funktionen zur Achslastermittlung an einer mechanisch gefederten Fahrzeugachse gemäß einer weiteren Ausführungsform der Erfindung mit mindestens folgenden Schritten durchgeführt werden:
- Auswahl und Aktivierung einer Funktion Achslastermittlung an einer mechanisch gefederter Fahrzeugachse anhand der Plausibilitätsprüfung,
- Erfassung eines achslastabhängigen Winkels einer die betreffende Fahrzeugachse und den Fahrzeugaufbau gelenkig verbindenden Hebelvorrichtung zwischen der betreffenden Fahrzeugachse und dem Fahrzeugaufbau mittels eines dem Wegsensor zugehörigen Drehwinkelsensors,
- Berechnung der Achslast an der mechanisch gefederten Fahrzeugachse aus diesem Winkel mittels eines Rechenalgorithmus, welcher zumindest eine Winkel-Achslast-Kennlinie oder daraus abgeleitete Größen auswertet, wobei der Rechenalgorithmus in der elektronischen Steuereinheit implementiert ist und die Kennlinie in einem Speicher dieser Steuereinheit hinterlegt ist, und
- Ausgabe der ermittelten Achslast an der mechanisch gefederten Fahrzeugachse auf einem Datenbus und/oder Weiterleitung an eine Achslastanzeigeeinrichtung. Demnach können auch die Messwerte eines Drehwinkelsensors am Hebelmechanismus zwischen Achse und Aufbau als direktes Ausgangssignal des Wegsensors zur Achslastberechnung über eine Winkel-Achslast-Kennlinie verwendet werden. Dadurch kann die Achslast besonders schnell ermittelt und zur Verfügung gestellt werden.

Die Funktionen zur Achslastermittlung an einer pneumatisch oder hydraulisch gefederten Fahrzeugachse kann gemäß einer anderen Ausführungsform der Erfindung mit mindestens folgenden Schritten durchgeführt werden:
- Auswahl und Aktivierung einer Funktion Achslastermittlung an einer pneumatisch oder hydraulisch gefederter Fahrzeugachse anhand der Plausibilitätsprüfung,
- Erfassung eines achslastabhängigen Druckwertes mittels mindestens eines an der betreffenden pneumatisch oder hydraulisch gefederten Fahrzeugachse installierten Drucksensors,
- Berechnung der Achslast an der pneumatisch oder hydraulisch gefederten Fahrzeugachse aus diesem Druckwert mittels eines Rechenalgorithmus, welcher zumindest eine Druck-Achslast-Kennlinie oder daraus abgeleitete Größen auswertet, wobei der Rechenalgorithmus in der elektronischen Steuereinheit implementiert ist und die Kennlinie in einem Speicher dieser Steuereinheit hinterlegt ist, und
- Ausgabe des ermittelten Achslastwerts an der pneumatisch oder hydraulisch gefederten Fahrzeugachse auf einem Datenbus und/oder Weiterleitung an eine Achslastanzeigeeinrichtung.

Demnach steht vorteilhaft wie bisher eine Funktion zur Achslastermittlung an den pneumatisch oder hydraulisch gefederten Fahrzeugachsen zur Verfügung. Es ist lediglich die Plausibilitätsprüfung gemäß der Erfindung vorgeschaltet.

Es ist vorteilhaft, wenn das Verfahren in bestimmten Zeitabständen wiederholt durchgeführt wird oder wenn zumindest die jeweiligen Sensorsignale über einen vorbestimmten Zeitraum mehrmals erfasst und daraus zeitlich gemittelte Ausgangssignale gebildet werden. Dadurch kann die Genauigkeit und Zuverlässigkeit der ermittelten Achslastwerte erhöht werden. Zumindest sollte das Verfahren nach jedem neuen Einschalten der Steuereinheit des Niveauregelsystems durchgeführt werden.

Dadurch ist eine einwandfreie Betriebsbereitschaft des Systems gewährleistet.

Die Erfindung geht zur Lösung der vorrichtungsbezogenen Aufgabe aus von einer Vorrichtung zur Ermittlung einer Achslast an einem mechanisch und/oder pneumatisch oder hydraulisch gefederten Fahrzeug. Gemäß der Erfindung ist bei dieser Vorrichtung vorgesehen, dass ein für mechanisch, pneumatisch oder hydraulisch oder gemischt gefederte Fahrzeuge einheitlich ausgebildetes Niveauregelsystem mit einem integrierten Achslastmesssystem angeordnet ist, mit einer elektronischen Steuereinheit, in der Rechenalgorithmen implementiert sind für eine Plausibilitätsprüfung zur Erkennung der jeweiligen Federungsart einer Fahrzeugachse sowie für eine Berechnung der Achslast an diesen Fahrzeugachsen anhand von an den Fahrzeugachsen erfassten Sensormesssignalen und Vergleichen mit in einem Speicher hinterlegten Kennlinien, wobei der Steuereinheit für jede mechanisch gefederte Fahrzeugachse mindestens ein an dieser installierter Wegsensor zugeordnet ist, und wobei der Steuereinheit für jede pneumatisch oder hydraulisch gefederte Fahrzeugachse mindestens ein an der betreffenden Fahrzeugachse installierter Drucksensor zugeordnet ist.

Demnach kann eine vorhandene Steuereinheit eines ECAS-Niveauregelsystems vorteilhaft auch für Fahrzeuganwendungen genutzt werden, bei denen das Fahrzeug keine Luftfeder aufweist, also auch keine Tragbälge, Steuerventile und Drucksensoren, oder bei denen das Fahrzeug nicht nur luftgefederte Achsen mit diesen Komponenten sondern auch mechanisch gefederte Achsen ohne diese Komponenten aufweist. Die Steuereinheit wird lediglich dahingehend softwaremäßig modifiziert und erweitert, dass auch an diesen mechanisch gefederten Achsen die Achslast ermittelt werden kann, indem die Steuereinheit Messwerte von an den mechanisch gefederten Achsen eingebauten Wegsensoren erfasst und zu Achslastwerten umrechnet.

Die Steuereinheit erkennt diese Anwendung, wenn keine Signale von Drucksensoren und Steuerventilen an beziehungsweise für diese Achsen vorliegen oder diese Signale den Wert Null aufweisen. An den luftgefederten Achsen wird die Achslast wie bisher mithilfe der Drucksensoren ermittelt. Die Steuereinheit stellt somit je nach Federausstattung des Fahrzeugs Achslastwerte von luftgefederten Achsen und/oder mechanisch gefederten Achsen zur Verfügung.

Ein Fahrzeug, wie beispielsweise ein Nutzfahrzeug oder ein Personenkraftwagen, weist ein Niveauregelsystem zur Niveauregelung und zur Achslastermittlung an mechanisch und/oder pneumatisch oder hydraulisch gefederten Fahrzeugachsen auf, welches gemäß dem Vorrichtungsanspruch aufgebaut und selektiv oder kumulativ zur Durchführung eines Verfahrens nach wenigstens einem der Verfahrensansprüche betreibbar ist.

Die Erfindung wird nachstehend anhand von einem in der beigefügten Zeichnung dargestellten Ausführungsbeispiel näher erläutert. In der Zeichnung zeigt
Fig. 1 ein stark schematisch vereinfacht dargestelltes Niveauregelsystem, welches zur Achslastermittlung und zur Niveauregelung an einem mit mechanisch und pneumatischen gefederten Achsen ausgestatteten Fahrzeug ausgebildet ist, und
Fig. 2 ein Flussdiagramm einer Ausführungsform eines Verfahrens gemäß der Erfindung zur Ermittlung einer Achslast an einem gemischtgefederten Fahrzeug gemäß Fig. 1.

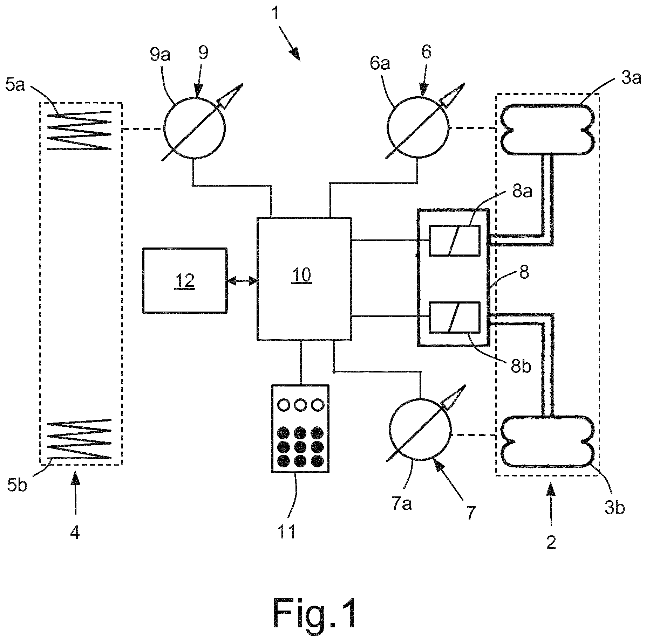

Das in Fig. 1 vereinfacht dargestellte Niveauregelsystem 1 eines Fahrzeugs, beispielsweise ein ECAS-System beispielsweise eines Lastkraftwagens, weist zwei verstellbare, als Tragbälge ausgebildete Luftfederelemente 3a, 3b für eine federnde Abstützung eines nicht dargestellten Fahrzeugaufbaus gegenüber einer als Antriebsachse ausgebildeten hinteren Fahrzeugachse 2 auf. Eine vordere Fahrzeugachse 4 ist hingegen über zwei als Schraubendruckfedern ausgebildete Stahlfederelemente 5a, 5b gegenüberüber dem Fahrzeugaufbau abgestützt.

Der pneumatisch oder hydraulisch, hier vorliegend luftgefederten hinteren Fahrzeugachse 2 sind eine erste Wegmesseinrichtung 6 mit mindestens einem ersten Wegsensor 6a zur Erfassung von Weggrößen für eine Niveaubestimmung, eine Druckmesseinrichtung 7 mit mindestens einem Drucksensor 7a zur Erfassung von Druckwerten für eine Achslastermittlung an dieser Achse 2 sowie eine als Ventilkreis ausgebildete Steuerventileinrichtung 8 mit einem als Magnetventil ausgebildeten Steuerventil 8a, 8b je Luftfederelement 3a, 3b zugeordnet. Die Steuerventileinrichtung 8 ist mit den Luftfederelementen 3a, 3b schaltbar pneumatisch verbunden und weist einen nicht näher bezeichneten Druckluftanschluss auf. Der mechanisch, hier vorliegend stahlgefederten vorderen Fahrzeugachse 4 ist eine zweite Wegmesseinrichtung 9 mit mindestens einem zweiten Wegsensor 9a für eine Achslastermittlung an dieser Achse 4 zugeordnet.

Außerdem ist eine elektronische Steuereinheit 10 zur Auswertung der Wegmesswerte und der Druckmesswerte sowie zur Steuerung der Luftfederelemente 3a, 3b zur Einstellung eines Fahrniveaus zwischen dem Fahrzeugaufbau und der luftgefederten Fahrzeugachse 2 angeordnet. Zudem ist eine Bedieneinheit 11 für einen jeweiligen Benutzer an die Steuereinheit 10 elektrisch angeschlossen. An der Bedieneinheit 11 kann der Benutzer Einstellungen sowie eine Kalibrierung des Niveauregelsystems 1 vornehmen, beispielsweise wie in der EP 2 097 278 B1 beschrieben. Der Ventilkreis 8 und die zwei Wegmesseinrichtungen 6, 9 sowie die Druckmesseinrichtung 7 sind mit der Steuereinheit 10 signaltechnisch verbunden. Die Steuereinheit 10 weist einen CAN-Controller auf, über den die Steuereinheit 10 an einen CAN-Bus 12 angeschlossen ist. Der CAN-Controller steuert Unterbrechungsanforderungen und regelt den Datentransfer. Der Aufbau eines CAN-Busses in einem Fahrzeug sowie die Anbindung verschiedener Busteilnehmer an den CAN-Bus sind bekannt.

Die ersten und zweiten Wegsensoren 6a, 9a sind am Fahrzeugaufbau jeweils in der Nähe ihrer zugeordneten Fahrzeugachse 2, 4 befestigt und über jeweils ein nicht dargestelltes Hebelsystem mit der Fahrzeugachse 2, 4 verbunden. Die Wegsensoren 6a, 9a weisen jeweils einen nicht dargestellten Drehwinkelsensor auf, welcher die jeweilige Winkelstellung des erwähnten Hebelsystems erfasst. Die Drehbewegung des Hebelsystems kann im Inneren des Wegsensors 6a, 9a in eine Linearbewegung umgesetzt werden, beispielsweise in Form des Eintauchens eines Ankers in eine Spule, wobei bei der Eintauchbewegung des ferromagnetischen Ankers in die feststehende Spule eine wegabhängige Phasenverschiebung zwischen Strom und Spannung entsteht, die als Ausgangssignal zur Verfügung gestellt wird, welches die Steuereinheit 10 erhält. Aus diesem Signal kann ein Istniveau des Abstands zwischen der jeweiligen Fahrzeugachse 2, 4 und dem Fahrzeugaufbau bestimmt werden. Der Wert des Istniveaus kann an der luftgefederten Fahrzeugachse 2 für eine Niveauregelung verwendet werden.

An der mechanisch gefederten Fahrzeugachse 4 wird der Wert des Istniveaus zur Achslastermittlung verwendet, wie es nachfolgend beschrieben wird. Die Achslastermittlung an der mechanisch gefederten Fahrzeugachse 4 macht sich dabei den einfachen Zusammenhang zunutze, dass aus der Federkonstante des Federelements 5a, 5b und der gemessenen Einfederung diejenige Kraft ermittelt wird, welche auf der Fahrzeugachse 4 liegt, wodurch die Achslast des Fahrzeugs mittels einer einfachen Kennlinie bestimmt werden kann. Eine Achslastermittlung an einer luftgefederten Fahrzeugachse 2 ist mittels einer Wegmesseinrichtung 6 nicht ohne weiteres möglich. Daher wird üblicherweise die Achslast an einer luftgefederten Fahrzeugachse 2 mit Hilfe einer Druckmesseinrichtung 7 ermittelt.

Eine Niveauregelung einer Luftfederung mit einem solchen System ist an sich bekannt. Üblicherweise erfasst ein Wegsensor zur Niveauregelung in bestimmten Zeitabständen, beispielsweise alle 100ms, den Abstand zwischen Fahrzeugachse und Fahrzeugaufbau. Der ermittelte Messwert ist der Istwert eines Regelkreises und wird an die Steuereinheit 10 weitergeleitet. In der Steuereinheit 10 wird dieser Istwert mit einem in der Steuereinheit 10 festgeschriebenen Sollwert verglichen. Bei einer unzulässigen Differenz zwischen Istwert und Sollwert wird von der Steuereinheit 10 einem Magnetventil ein Stellsignal übermittelt. In Abhängigkeit von diesem Stellsignal steuert das Magnetventil nun den Tragbalg an und belüftet oder entlüftet diesen. Durch die Druckänderung im Tragbalg ändert sich auch der Abstand zwischen Fahrzeugachse und Fahrzeugaufbau. Der Abstand wird erneut durch den Wegsensor erfasst und der Zyklus beginnt von vorn.

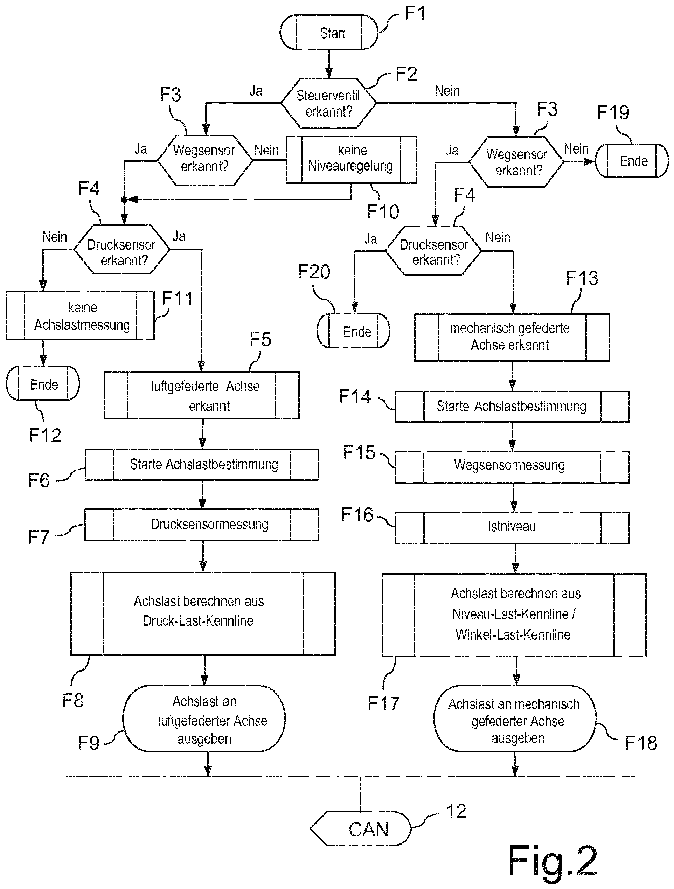

Die folgende Ausführung beschränkt sich auf den Ablauf eines Verfahrens gemäß der Erfindung zur Ermittlung einer Achslast zum einen an der mechanisch gefederten Fahrzeugachse 4 und zum anderen an der luftgefederten Fahrzeugachse 2. Fig. 2 dient zur Erläuterung des Verfahrens. Demnach ist in der Fig. 2 ein Flussdiagramm mit Funktionsblöcken F1 bis F20 von Verfahrensschritten zur Ermittlung einer Achslast an der luftgefederten Fahrzeugachse 2 und an der mechanisch gefederten Fahrzeugachse 4 dargestellt.

Das Verfahren startet mit der Aktivierung des Niveauregelsystems 1, beispielsweise beim Einschalten einer Zündanlage des Fahrzeugs in einem ersten Funktionsblock F1. Zunächst erfolgt eine achsenspezifische Plausibilitätsprüfung mit drei Komponentenabfragen, anhand der sich das Programm in zwei Programmzweige teilt. Diese sind eine ersten Routine, welche die Achslast an der luftgefederten Fahrzeugachse 2 bestimmt und eine zweite Routine, welche die Achslast an der mechanisch gefederten Fahrzeugachse 4 bestimmt.

Die Plausibilitätsprüfung beginnt mit einer ersten Abfrage F2, ob in einem vorbestimmten Zeitraum ein Signal eines Steuerventils 8a, 8b ungleich Null vorliegt. Es folgt eine zweite Abfrage F3, ob in einem vorbestimmten Zeitraum ein Signal eines Wegsensors 6a, 9a ungleich Null vorliegt. Anschließend erfolgt eine dritte Abfrage F4, ob in einem vorbestimmten Zeitraum ein Signal eines Drucksensors 7a ungleich Null vorliegt. Diese Abfragen werden gleichermaßen an jeder Fahrzeugachse 2, 4 beziehungsweise deren zugeordneten Komponenten durchgeführt.

Liegen ein Steuerventilsignal, ein Wegsensorsignal und Drucksensorsignal vor, wird in Block F5 die luftgefederte Fahrzeugachse 2 erkannt und die zugehörige Routine zur Achslastermittlung startet in Block F6. In Block F7 wird das Drucksensorsignal ausgelesen. In Block F8 wird mittels einer in einem Speicher der Steuereinheit 10 hinterlegten Druck-Achslast-Kennlinie die Achslast an der luftgefederten Fahrzeugachse 2 ermittelt und in Block F9 auf dem CAN-Bus 12 gesendet.

Die Achslastinformation der luftgefederten Fahrzeugachse 2 kann dem Fahrer mittels eines Displays angezeigt werden und/oder von anderen elektronischen Regelsystemen genutzt werden. Wird kein Wegsensorsignal erfasst, obwohl ein Steuerventilsignal vorliegt, ist an der luftgefederten Fahrzeugachse 2 gemäß Block F10 keine Niveauregelung möglich.

Wird kein Drucksensorsignal registriert, obwohl ein Steuerventilsignal und ein Wegsensorsignal vorliegen, kann an der luftgefederten Fahrzeugachse 2 gemäß Block F11 keine Achslastmessung erfolgen und die Routine an der luftgefederten Fahrzeugachse 2 endet in Block F12.

Liegen in Block F2 kein Steuerventilsignal, jedoch in Block F3 ein Wegsensorsignal und in Block F4 allerdings kein Drucksensorsignal vor, wird in Block F13 die mechanisch gefederte Fahrzeugachse 2 erkannt und die zugehörige Routine zur Achslastermittlung startet in Block F14. In Block F15 wird das Wegsensorsignal beziehungsweise Drehwinkelsensorsignal ausgelesen. In Block F16 wir daraus das Istniveau bestimmt. In Block F17 wird mittels einer in einem Speicher der Steuereinheit 10 hinterlegten Niveau-Achslast-Kennlinie, in der das gemessene Istniveau mit der Achslast korreliert wird oder mittels einer Winkel-Achslast-Kennlinie, in der der gemessene Drehwinkel des Drehwinkelsensors mit der Achslast korreliert wird, die Achslast an der mechanisch gefederten Fahrzeugachse 4 ermittelt und in Block F18 auf dem CAN-Bus 12 gesendet.

Die Achslastinformation zu der mechanisch gefederten Fahrzeugachse 4 kann dem Fahrer wiederum über ein Display angezeigt werden und/oder von anderen elektronischen Regelsystemen genutzt werden.

Somit stehen die Achslastinformationen an allen Fahrzeugachsen 2, 4 zur Verfügung. Werden kein Steuerventilsignal und kein Wegsensorsignal erfasst, endet die Routine in Block F19. Wird ein Drucksensorsignal registriert, obwohl kein Steuerventilsignal vorliegt, liegt ein Fehler vor und die Routine endet in Block F20.

Die Routinen des Verfahrens können an beliebig vielen Fahrzeugachsen für mechanisch, pneumatisch oder hydraulisch oder gemischt gefederte Fahrzeuge durchgeführt werden.

### Bezugszeichenliste (Bestandteil der Beschreibung)

- 1: Niveauregelsystem
- 2: Pneumatisch oder hydraulisch gefederte Fahrzeugachse
- 3a: Erstes Luftfederelement
- 3b: Zweites Luftfederelement
- 4: Mechanisch gefederte Fahrzeugachse
- 5a: Erstes Stahlfederelement
- 5b: Zweites Stahlfederelement
- 6: Erste Wegmesseinrichtung
- 6a: Wegsensor der ersten Wegmesseinrichtung
- 7: Druckmesseinrichtung
- 7a: Drucksensor der Druckmesseinrichtung
- 8: Ventilkreis
- 8a: Erstes Steuerventil des Ventilkreises
- 8b: Zweites Steuerventil des Ventilkreises
- 9: Zweite Wegmesseinrichtung
- 9a: Wegsensor der zweiten Wegmesseinrichtung
- 10: Elektronische Steuereinheit
- 11: Bedieneinheit der Steuereinheit
- 12: CAN-Bus
- F1 - F20: Funktionsblöcke eines Steuerungsverfahrens

## Patentansprüche

1. Verfahren zur Ermittlung einer Achslast an einem mechanisch und/oder pneumatisch oder hydraulisch gefederten Fahrzeug, wobei die Achslast mithilfe von für ein elektronisch geregeltes pneumatisches oder hydraulisches Niveauregelsystem (1) vorgesehenen Steuermittel und Sensormitteln ermittelt wird, wobei diese Steuer- und Sensormittel in dem Fahrzeug derart installiert und/oder funktional erweitert sind, dass zusätzlich zu einer Niveauregelung oder anstelle einer Niveauregelung Funktionen zur Achslastermittlung an mechanisch gefederten Fahrzeugachsen (4) sowie zur Achslastermittlung an pneumatisch oder hydraulisch gefederten Fahrzeugachsen (2) verfügbar sind, wobei die Achslastermittlung an einer mechanisch gefederten Fahrzeugachse (4) mittels einer Wegmesseinrichtung (9) erfolgt, wobei die Achslastermittlung an einer pneumatisch oder hydraulisch gefederten Fahrzeugachse (2) mittels einer Druckmesseinrichtung (7) erfolgt, **dadurch gekennzeichnet, dass** zunächst eine in einer elektronischen Steuereinheit (10) des Niveauregelsystems (1) implementierte Plausibilitätsprüfung durchgeführt wird, anhand der das Niveauregelsystem (1) die jeweilige Federungsart mechanisch oder pneumatisch oder hydraulisch einer Fahrzeugachse (2, 4) erkennt sowie anschließend die entsprechende Funktion zur Achslastermittlung aktiviert wird.

2. Verfahren nach Anspruch 1, **dadurch gekennzeichnet, dass** die Plausibilitätsprüfung eine Feststellung auf das Vorhandensein einer Steuerventileinrichtung (8), einer Wegmesseinrichtung (6, 9) und einer Druckmesseinrichtung (7) an derjeweiligen Fahrzeugachse (2, 4) umfasst, wobei auf eine mechanisch gefederte Fahrzeugachse (4) geschlossen wird, wenn an zugeordneten Eingängen oder Ausgängen der Steuereinheit (10) des Niveauregelsystems (1) kein Steuerventilsignal und kein Drucksensorsignal anliegen oder über einen vorbestimmten Zeitraum des Fahrzeugbetriebs den Wert Null aufweisen, sowie ein Wegsensorsignal anliegt oder ein solches Wegsensorsignal einen von Null verschiedenen Wert aufweist, und auf eine pneumatisch oder hydraulisch gefederte Fahrzeugachse (2) geschlossen wird, wenn an zugeordneten Eingängen oder Ausgängen der Steuereinheit (10) des Niveauregelsystems (1) ein Steuerventilsignal und ein Drucksensorsignal stringent sowie ein Wegsensorsignal optional anliegen oder über einen vorbestimmten Zeitraum des Fahrzeugbetriebs einen von Null verschiedenen Wert aufweisen.

3. Verfahren nach Anspruch 1 oder 2, **dadurch gekennzeichnet, dass** mindestens folgenden Schritte durchgeführt werden:
- Auswahl und Aktivierung der Funktion Achslastermittlung an einer mechanisch gefederter Fahrzeugachse (4) anhand der Plausibilitätsprüfung,
- Erfassung eines achslastabhängigen Abstands zwischen der betreffenden Fahrzeugachse (4) und einem Fahrzeugaufbau mittels mindestens eines an der betreffenden mechanisch gefederten Fahrzeugachse (4) installierten Wegsensors (9, 9a) sowie Bestimmen eines Istniveaus aus dem erfassten Messsignal,
- Berechnung der Achslast an der mechanisch gefederten Fahrzeugachse (4) aus diesem Istniveau mittels eines Rechenalgorithmus, welcher zumindest eine Niveau-Achslast-Kennlinie oder daraus abgeleitete Größen auswertet, wobei der Rechenalgorithmus in der elektronischen Steuereinheit (10) implementiert ist und die Kennlinie in einem Speicher dieser Steuereinheit (10) hinterlegt ist, und
- Ausgabe der ermittelten Achslast an der mechanisch gefederten Fahrzeugachse (4) auf einem Datenbus (12) und/oder Weiterleitung an eine Achslastanzeigeeinrichtung sowie optionale Ausgabe des ermittelten Istniveaus an der mechanisch gefederten Fahrzeugachse (4) auf dem Datenbus.

4. Verfahren nach Anspruch 1 oder 2, **dadurch gekennzeichnet, dass** mindestens folgenden Schritte durchgeführt werden:
- Auswahl und Aktivierung einer Funktion Achslastermittlung an einer mechanisch gefederter Fahrzeugachse (4) anhand der Plausibilitätsprüfung,
- Erfassung eines achslastabhängigen Winkels einer die betreffende Fahrzeugachse (4) und den Fahrzeugaufbau gelenkig verbindenden Hebelvorrichtung zwischen der betreffenden Fahrzeugachse (4) und dem Fahrzeugaufbau mittels eines dem Wegsensor (9, 9a) zugehörigen Drehwinkelsensors,
- Berechnung der Achslast an der mechanisch gefederten Fahrzeugachse (4) aus diesem Winkel mittels eines Rechenalgorithmus, welcher zumindest eine Winkel-Achslast-Kennlinie oder daraus abgeleitete Größen auswertet, wobei der Rechenalgorithmus in der elektronischen Steuereinheit (10) implementiert ist und die Kennlinie in einem Speicher dieser Steuereinheit (10) hinterlegt ist, und
- Ausgabe der ermittelten Achslast an der mechanisch gefederten Fahrzeugachse (4) auf einem Datenbus (12) und/oder Weiterleitung an eine Achslastanzeigeeinrichtung.

5. Verfahren nach Anspruch 1 oder 2, **dadurch gekennzeichnet, dass** mindestens folgenden Schritte durchgeführt werden:
- Auswahl und Aktivierung einer Funktion Achslastermittlung an einer pneumatisch oder hydraulisch gefederten Fahrzeugachse (2) anhand der Plausibilitätsprüfung,
- Erfassung eines achslastabhängigen Druckwertes mittels mindestens eines an der betreffenden pneumatisch oder hydraulisch gefederten Fahrzeugachse (2) installierten Drucksensors (7, 7a),
- Berechnung der Achslast an der pneumatisch oder hydraulisch gefederten Fahrzeugachse (2) aus diesem Druckwert mittels eines Rechenalgorithmus, welcher zumindest eine Druck-Achslast-Kennlinie oder daraus abgeleitete Größen auswertet, wobei der Rechenalgorithmus in der elektronischen Steuereinheit (10) implementiert ist und die Kennlinie in einem Speicher dieser Steuereinheit (10) hinterlegt ist, und
- Ausgabe des ermittelten Achslastwerts an der pneumatisch oder hydraulisch gefederten Fahrzeugachse (2) auf einem Datenbus (12) und/oder Weiterleitung an eine Achslastanzeigeeinrichtung.

6. Verfahren nach einem der Ansprüche 1 bis 5, **dadurch gekennzeichnet, dass** das Verfahren in bestimmten Zeitabständen wiederholt durchgeführt wird oder dass zumindest die jeweiligen Sensorsignale über einen vorbestimmten Zeitraum mehrmals erfasst und daraus zeitlich gemittelte Ausgangssignale gebildet werden.

7. Fahrzeug, wie Nutzfahrzeug oder Personenkraftwagen, mit einem Niveauregelsystem (1) zur Niveauregelung und zur Achslastermittlung an mechanisch und/oder pneumatisch oder hydraulisch gefederten Fahrzeugachsen (2, 4), wobei das Niveauregelsystem (1) gemäß einer Vorrichtung zur Ermittlung einer Achslast an dem Fahrzeug aufgebaut und selektiv oder kumulativ zur Durchführung eines Verfahrens nach wenigstens einem der Verfahrensansprüche 1 bis 6 betreibbar ist, wobei das Niveauregelsystem (1) für mechanisch, pneumatisch oder hydraulisch oder gemischt gefederte Fahrzeuge einheitlich ausgebildet und mit einem integrierten Achslastmesssystem angeordnet ist, mit einer elektronischen Steuereinheit (10), in der Rechenalgorithmen implementiert sind für eine Plausibilitätsprüfung zur Erkennung der jeweiligen Federungsart einer Fahrzeugachse (2, 4) sowie für eine Berechnung der Achslast an diesen Fahrzeugachsen (2, 4) anhand von an den Fahrzeugachsen (2, 4) erfassten Sensormesssignalen und Vergleichen mit in einem Speicher hinterlegten Kennlinien, wobei der Steuereinheit (10) für jede mechanisch gefederte Fahrzeugachse mindestens ein an dieser installierter Wegsensor (9, 9a) zugeordnet ist, und wobei der Steuereinheit (10) für jede pneumatisch oder hydraulisch gefederte Fahrzeugachse (2) mindestens ein an der betreffenden Fahrzeugachse (2) installierter Drucksensor (7, 7a) zugeordnet ist.

## Claims

1. Method for determining an axle load on a mechanically and/or pneumatically or hydraulically suspended vehicle, the axle load being determined by means of control means and sensor means provided for an electronically controlled pneumatic or hydraulic level control system (1), these control and sensor means being installed and/or functionally expanded in the vehicle in such a way that, in addition to a level control or instead of a level control, functions are available for axle load determination on mechanically suspended vehicle axles (4) and for axle load determination on pneumatically or hydraulically suspended vehicle axles (2), the axle load determination taking place on a mechanically suspended vehicle axle (4) by means of a distance measuring device (9), the axle load determination taking place on a pneumatically or hydraulically suspended vehicle axle (2) by means of a pressure measuring device (7),
**characterized in that** a plausibility check implemented in an electronic control unit (10) of the level control system (1) is initially carried out, on the basis of which the level control system (1) detects the particular suspension type, mechanical or pneumatic or hydraulic, of a vehicle axle (2, 4), and the corresponding function for determining the axle load is activated.

2. Method according to claim 1, **characterized in that** the plausibility check comprises establishing the presence of a control valve device (8), a distance measuring device (6, 9) and a pressure measuring device (7) on the particular vehicle axle (2, 4), a mechanically suspended vehicle axle (4) being inferred when no control valve signal and no pressure sensor signal are present at associated inputs or outputs of the control unit (10) of the level control system (1), or the control valve signal and the pressure sensor signal have the value zero over a predetermined time period of the vehicle operation, and a travel sensor signal is present or such a travel sensor signal has a value unequal to zero, and a pneumatically or hydraulically suspended vehicle axle (2) being inferred if a control valve signal and a pressure sensor signal are stringently present and a travel sensor signal is optionally present at associated inputs or outputs of the control unit (10) of the level control system (1), or the control valve signal, pressure sensor signal and the travel sensor signal have a value unequal to zero over a predetermined time period of the vehicle operation.

3. Method according to either claim 1 or claim 2, **characterized in that** at least the following steps are carried out:
- selecting and activating the function of axle load determination on a mechanically suspended vehicle axle (4) on the basis of the plausibility check,
- detecting an axle-load-dependent distance between the vehicle axle (4) in question and a vehicle body by means of at least one travel sensor (9, 9a) installed on the mechanically suspended vehicle axle (4) in question and determining an actual level from the detected measurement signal,
- calculating the axle load on the mechanically suspended vehicle axle (4) from this actual level by means of a calculation algorithm which evaluates at least one level-axle load characteristic curve or variables derived therefrom, the calculation algorithm being implemented in the electronic control unit (10) and the characteristic curve being stored in a memory of this control unit (10), and
- outputting the determined axle load on the mechanically suspended vehicle axle (4) on a data bus (12) and/or forwarding to an axle load display device and optionally outputting the determined actual level on the mechanically suspended vehicle axle (4) on the data bus.

4. Method according to either claim 1 or claim 2, **characterized in that** at least the following steps are carried out:
- selecting and activating a function of axle load determination on a mechanically suspended vehicle axle (4) on the basis of the plausibility check,
- detecting an axle-load-dependent angle of a lever device articulated to the vehicle axle (4) in question and the vehicle body between the vehicle axle (4) in question and the vehicle body by means of a rotation angle sensor associated with the travel sensor (9, 9a),
- calculating the axle load on the mechanically suspended vehicle axle (4) from this angle by means of a calculation algorithm which evaluates at least one angle-axis load characteristic curve or variables derived therefrom, the calculation algorithm being implemented in the electronic control unit (10) and the characteristic curve being stored in a memory of this control unit (10), and
- outputting the determined axle load on the mechanically sprung vehicle axle (4) on a data bus (12) and/or forwarding to an axle load display device.

5. Method according to either claim 1 or claim 2, **characterized in that** at least the following steps are carried out:
- selecting and activating a function of axle load determination on a pneumatically or hydraulically suspended vehicle axle (2) on the basis of the plausibility check,
- detecting an axle-load-dependent pressure value by means of at least one pressure sensor (7, 7a) installed on the pneumatically or hydraulically suspended vehicle axle (2) in question,
- calculating the axle load on the pneumatically or hydraulically suspended vehicle axle (2) from this pressure value by means of a calculation algorithm which evaluates at least one pressure-axle load characteristic curve or variables derived therefrom, the calculation algorithm being implemented in the electronic control unit (10) and the characteristic curve being stored in a memory of this control unit (10), and
- outputting the determined axle load value on the pneumatically or hydraulically suspended vehicle axle (2) on a data bus (12) and/or forwarding to an axle load display device.

6. Method according to any of claims 1 to 5, **characterized in that** the method is carried out repeatedly at certain time intervals or **in that** at least the particular sensor signals are detected several times over a predetermined period of time and output signals averaged over time are formed therefrom.

7. Vehicle, such as a commercial vehicle or passenger car, having a level control system (1) for level control and for determining an axle load on mechanically and/or pneumatically or hydraulically suspended vehicle axles (2, 4), wherein the level control system (1) is designed according to a device for determining an axle load on the vehicle and can be operated selectively or cumulatively for carrying out a method according to at least one of method claims 1 to 6, wherein the level control system (1) is designed to be uniform for mechanically, pneumatically or hydraulically suspended or mixed-suspension vehicles, and is arranged using an integrated axle load measuring system, with an electronic control unit (10) in which calculation algorithms are implemented for a plausibility check for detecting the particular suspension type of a vehicle axle (2, 4), and for calculating the axle load on these vehicle axles (2, 4) on the basis of sensor measuring signals detected on the vehicle axles (2, 4), and comparing these with characteristic curves stored in a memory, wherein the control unit (10) for each mechanically suspended vehicle axle is assigned at least one travel sensor (9, 9a) installed thereon, and wherein the control unit (10) for each pneumatically or hydraulically suspended vehicle axle (2) is assigned at least one pressure sensor (7, 7a) installed on the vehicle axle (2) in question.

## Revendications

1. Procédé pour la détermination d'une charge d'essieu sur un véhicule à suspension mécanique et/ou pneumatique ou hydraulique, dans lequel la charge d'essieu est déterminée au moyen d'un moyen de commande et des moyens capteurs prévus pour un système de régulation de niveau (1) pneumatique ou hydraulique à régulation électronique, dans lequel ces moyens de commande et capteurs sont installés dans le véhicule et/ou sont fonctionnellement améliorés dans celui-ci de sorte que, en plus d'une régulation de niveau ou au lieu d'une régulation de niveau, des fonctions pour la détermination de charge d'essieu sont disponibles sur des essieux de véhicule (4) à suspension mécanique et des fonctions pour la détermination de charge d'essieu sont disponibles sur des essieux de véhicule (2) à suspension pneumatique ou hydraulique, dans lequel la détermination de charge d'essieu sur un essieu de véhicule (4) à suspension mécanique se fait à l'aide d'un appareil de mesure de déplacement (9), dans lequel la détermination de charge d'essieu sur un essieu de véhicule (2) à suspension pneumatique ou hydraulique se fait à l'aide d'un appareil de mesure de pression (7), **caractérisé en ce qu'**un contrôle de plausibilité réalisé dans une unité de commande (10) électronique du système de régulation de niveau (1) est d'abord réalisé, lequel contrôle de plausibilité permet au système de régulation de niveau (1) de détecter le type de suspension respectif d'un essieu de véhicule (2, 4), qu'il soit mécanique ou pneumatique ou hydraulique, **et en ce que** la fonction correspondante pour la détermination de charge d'essieu est ensuite activée.

2. Procédé selon la revendication 1, **caractérisé en ce que** le contrôle de plausibilité comprend une constatation de la présence d'un appareil à soupape de commande (8), d'un appareil de mesure de déplacement (6, 9) et d'un appareil de mesure de pression (7) sur l'essieu de véhicule (2, 4) respectif, dans lequel il est conclu qu'il s'agit d'un essieu de véhicule (4) à suspension mécanique lorsqu'aucun signal de soupape de commande et aucun signal de capteur de pression ne sont présents à des entrées ou des sorties correspondantes de l'unité de commande (10) du système de régulation de niveau (1) ou présentent la valeur zéro pendant une période de temps prédéterminée du fonctionnement du véhicule, et un signal de capteur de déplacement est présent ou un tel signal de capteur de déplacement présente une valeur différente de zéro, et il est conclu qu'il s'agit d'un essieu de véhicule (2) à suspension pneumatique ou hydraulique lorsqu'un signal de soupape de commande et un signal de capteur de pression sont strictement présents et un signal de capteur de déplacement est éventuellement présent à des entrées ou des sorties correspondantes de l'unité de commande (10) du système de régulation de niveau (1) ou présentent une valeur différente de zéro pendant une période de temps prédéterminée du fonctionnement du véhicule.

3. Procédé selon la revendication 1 ou 2, **caractérisé en ce qu'**au moins les étapes suivantes sont réalisées :
- sélection et activation, sur la base du contrôle de plausibilité, de la fonction de détermination de charge d'essieu sur un essieu de véhicule (4) à suspension mécanique,
- détection d'une distance, dépendant de la charge d'essieu, entre l'essieu de véhicule (4) concerné et une carrosserie de véhicule à l'aide d'au moins un capteur de déplacement (9, 9a) installé sur l'essieu de véhicule (4) à suspension mécanique concerné, ainsi que détermination d'un niveau réel à partir du signal de mesure détecté,
- calcul de la charge d'essieu sur l'essieu de véhicule (4) à suspension mécanique à partir de ce niveau réel à l'aide d'un algorithme de calcul qui évalue au moins une caractéristique niveau sur charge d'essieu ou des grandeurs qui en sont dérivées, dans lequel l'algorithme de calcul est mis en oeuvre dans l'unité de commande (10) électronique et la caractéristique est enregistrée dans une mémoire de cette unité de commande (10), et
- sortie de la charge d'essieu déterminée sur l'essieu de véhicule (4) à suspension mécanique sur un bus de données (12) et/ou transmission à un appareil d'affichage de charge d'essieu ainsi que sortie éventuelle du niveau réel déterminé sur l'essieu de véhicule (4) à suspension mécanique sur le bus de données.

4. Procédé selon la revendication 1 ou 2, **caractérisé en ce qu'**au moins les étapes suivantes sont réalisées :
- sélection et activation, sur la base du contrôle de plausibilité, d'une fonction de détermination de charge d'essieu sur un essieu de véhicule (4) à suspension mécanique,
- détection d'un angle, dépendant de la charge d'essieu, d'un dispositif à levier, lequel relie de manière articulée l'essieu de véhicule (4) concerné et la carrosserie de véhicule, entre l'essieu de véhicule (4) concerné et la carrosserie de véhicule à l'aide d'un capteur d'angle de rotation associé au capteur de déplacement (9, 9a),
- calcul de la charge d'essieu sur l'essieu de véhicule (4) à suspension mécanique à partir de cet angle à l'aide d'un algorithme de calcul qui évalue au moins une caractéristique angle sur charge d'essieu ou des grandeurs qui en sont dérivées, dans lequel l'algorithme de calcul est mis en oeuvre dans l'unité de commande (10) électronique et la caractéristique est enregistrée dans une mémoire de cette unité de commande (10), et
- sortie de la charge d'essieu déterminée sur l'essieu de véhicule (4) à suspension mécanique sur un bus de données (12) et/ou transmission à un appareil d'affichage de charge d'essieu.

5. Procédé selon la revendication 1 ou 2, **caractérisé en ce qu'**au moins les étapes suivantes sont réalisées :
- sélection et activation, sur la base du contrôle de plausibilité, d'une fonction de détermination de charge d'essieu sur un essieu de véhicule (2) à suspension pneumatique ou hydraulique,
- détection d'une valeur de pression, dépendant de la charge d'essieu, à l'aide d'au moins un capteur de pression (7, 7a) installé sur l'essieu de véhicule (2) à suspension pneumatique ou hydraulique concerné,
- calcul de la charge d'essieu sur l'essieu de véhicule (2) à suspension pneumatique ou hydraulique à partir de cette valeur de pression à l'aide d'un algorithme de calcul qui évalue au moins une caractéristique pression sur charge d'essieu ou des grandeurs qui en sont dérivées, dans lequel l'algorithme de calcul est mis en oeuvre dans l'unité de commande (10) électronique et la caractéristique est enregistrée dans une mémoire de cette unité de commande (10), et
- sortie de la valeur de charge d'essieu déterminée sur l'essieu de véhicule (2) à suspension pneumatique ou hydraulique sur un bus de données (12) et/ou transmission à un appareil d'affichage de charge d'essieu.

6. Procédé selon l'une des revendications 1 à 5, **caractérisé en ce que** le procédé est réalisé de manière répétée à des intervalles de temps réguliers, **ou en ce qu'**au moins les signaux de capteur respectifs sont détectés plusieurs fois pendant une période de temps prédéterminée, et des signaux de sortie moyennés dans le temps sont ainsi formés.

7. Véhicule, notamment véhicule utilitaire ou voiture de tourisme, comportant un système de régulation de niveau (1) pour la régulation du niveau et pour la détermination de la charge d'essieu sur des essieux de véhicule (2, 4) à suspension mécanique et/ou pneumatique ou hydraulique, dans lequel le système de régulation de niveau (1) est configuré conformément à un dispositif pour la détermination d'une charge d'essieu sur le véhicule et peut fonctionner sélectivement ou simultanément pour la réalisation d'un procédé selon au moins l'une des revendications de procédé 1 à 6, dans lequel le système de régulation de niveau (1) est formé d'un seul tenant pour des véhicules à suspension mécanique, pneumatique ou hydraulique ou à suspension mixte et est disposé à un système de mesure de charge d'essieu intégré, comportant une unité de commande (10) électronique dans lequel des algorithmes de calcul sont mis en oeuvre pour un contrôle de plausibilité pour la détection du type de suspension respectif d'un essieu de véhicule (2, 4) et pour un calcul de la charge d'essieu sur ces essieux de véhicule (2, 4) sur la base de signaux de mesure de capteur détectés sur les essieux de véhicule (2, 4) et une comparaison aux caractéristiques enregistrées dans une mémoire, dans lequel au moins un capteur de déplacement (9, 9a) est associé à l'unité de commande (10) pour chaque essieu de véhicule à suspension mécanique, lequel capteur de déplacement est installé sur celui-ci, et dans lequel au moins un capteur de pression (7, 7a) est associé à l'unité de commande (10) pour chaque essieu de véhicule (2) à suspension pneumatique ou hydraulique, lequel capteur de pression est installé sur l'essieu de véhicule (2) concerné.
